# EUROPEAN PATENT APPLICATION

(11) **EP 4 765 292 A1**
(43) Date of publication of application: **24.06.2026**
(21) Application number: 24869645.2
(22) Date of filing: 01.04.2024
(51) Int. Cl.: H01M 10/0569, H01M 10/0567, H01M 10/0566

(54) **ELECTROLYTE AND ALKALI METAL SECONDARY BATTERY CONTAINING SAME**

(30) Priority: 25.09.2023 CN 202311241237
(71) Applicant: Suzhou Institute of Nano-Tech and Nano-Bionics (SINANO), Chinese Academy of Sciences, Suzhou, Jiangsu 215123 (CN)
(72) Inventor: WANG, Zhicheng, Suzhou, Jiangsu 215123 (CN); XU, Jingjing, Suzhou, Jiangsu 215123 (CN); WU, Xiaodong, Suzhou, Jiangsu 215123 (CN)
(74) Representative: Ipsilon
(86) International application number: PCT/CN2024/085168
(87) International publication number: WO 2025/066075

(57) **Abstract**

Provided are an electrolyte, and an alkali metal secondary battery containing same. The electrolyte comprises a combination of an alkali metal salt and a solvent. The solvent comprises a combination of an ionic liquid, a weak polar solvent and an inert diluent, the weak polar solvent being a cyclic ether solvent. The electrolyte has low viscosity and good flame retardance and wettability, and can perform in-situ repair when an artificial SEI film on a surface of an alkali metal negative electrode is damaged, thereby ensuring long-term cycle stability of the battery. A surface of the alkali metal negative electrode of the alkali metal secondary battery is coated in advance with a layer of polyionic liquid artificial SEI film, inhibiting side reaction between the electrolyte and the electrode, and also reducing consumption of the electrolyte in the process of forming an SEI film. Additionally, by means of an electrostatic shielding effect of ionic liquid cations on a polymer chain segment, ion distribution can be homogenized, promoting uniform deposition of ions, alleviating the growth of metal dendrites, further prolonging the cycle life of the battery, and improving coulombic efficiency.

## Description

### TECHNICAL FIELD

The present application relates to the technical field of alkali metal secondary batteries, such as an electrolyte and an alkali metal secondary battery containing the same.

### BACKGROUND

In recent years, with the rapid development of the field of electric new energy vehicles, people have proposed higher and higher requirements for the development of the power storage batteries of the new energy vehicles, and the new energy storage battery is required to provide higher electric quantity in a limited volume and mass to solve the mileage anxiety problem brought by the long-distance driving. Therefore, at the present stage, it is urgent to develop an energy storage battery with higher energy density to meet the application requirements. However, due to the limited theoretical specific capacity (372 mAh·g⁻¹) of graphite based negative electrode materials in commercial lithium-ion batteries, it is difficult to make a breakthrough in the energy density of lithium-ion batteries at this stage. By using the alkali metal as a negative electrode material of batteries, for example, the lithium metal having advantages such as a very high theoretical specific capacity (3860 mAh·g⁻¹), a low electrochemical potential (-3.04 V vs. standard hydrogen electrode), and a low density (0.534 g·cm⁻³), the energy density of the energy storage battery can be greatly improved, which is expected to solve the mileage anxiety problem of new energy vehicles, and has a broad application prospect. However, the alkali metal negative electrode also has many problems that are difficult to be solved. Firstly, the active chemical property of the alkali metal makes the side reaction between the alkali metal and electrolyte serious, which easily causes the loss of active materials and the consumption of electrolyte during the cycling process, resulting in low Coulombic efficiency and short cycle life of the battery; secondly, the phenomenon of uncontrollable dendrite growth occurs in alkali metal during the repeated cycling process, and the dendrite is extremely likely to puncture the separator and lead to the internal short-circuit in the battery, thus resulting in the safety accidents such as the combustion and explosion of batteries.

The use of an artificial solid electrolyte interface layer (SEI) can effectively inhibit the interfacial side reaction between the electrode and the electrolyte, and alleviate the problem of metal dendrite growth at the same time, which can improve the Coulombic efficiency and cycling performance of the alkali metal secondary battery to a certain extent. However, the conventional artificial SEI film is mainly organic materials or inorganic materials, in which the ionic conductivity and stability of organic materials are poor, the flexibility of inorganic materials is poor, and at the same time, the breakage and shedding of the artificial SEI film are extremely easily caused by the serious volume expansion of the alkali metal electrode during the cycling process, which is difficult to ensure the long-term cycle stability of the battery, and the electrolyte system of the prior art mostly adopts carbonate ester solvents or ether solvents, which are easy to undergo side reactions with the surface of the alkali metal, thereby leading to problems such as low Coulombic efficiency and poor cycle stability of the battery. Meanwhile, such electrolyte systems are highly flammable, which increases the safety hazards in the use of the battery.

CN109888182A discloses an in-situ protected alkali metal electrode, a preparation method thereof, and an application therefor. The alkali metal electrode comprises an alkali metal material and a protective coating, the protective coating is an amalgam alloy which is generated by coating mercury on the alkali metal surface. CN115863769A discloses a fluorocarbonate ester electrolyte and a lithium-metal battery, and the fluorocarbonate ester electrolyte forms a solid electrolyte interfacial film rich in lithium fluoride on the electrode surface of the lithium-metal battery. The amalgam alloy and lithium fluoride are both inorganic materials, and such inorganic materials serving as alkali metal protective coatings have poor flexibility, and are prone to break and fall off during the using process, and the stability of the battery will be poor, and the fluorocarbonate ester electrolyte is prone to undergo side reactions with the alkali metal surfaces and is flammable, which has safety hazards.

Therefore, it is urgent to develop an alkali metal secondary battery that uses a more stable artificial SEI film to inhibit interfacial side reactions and metal dendrite growth as well as an electrolyte with flame retardant and other characteristics, so as to enhance the safety, Coulombic efficiency, and cycle life of the alkali metal secondary battery.

### SUMMARY

The following is a brief summary of subject matter that is described in detail herein. This summary is not intended to be limiting as to the scope of the claims.

The present application provides an electrolyte and an alkali metal secondary battery containing the same. The electrolyte can perform an in-situ reparation on the artificial SEI film on the surface of the alkali metal negative electrode when the artificial SEI film is damaged, which is conducive to further improving the stability of the alkali metal negative electrode, and also enhances the flame retardance to a certain extent to improve the safety of batteries; the alkali metal secondary battery can effectively ameliorate the problems such as the dendrite growth of the alkali metal negative electrode and interfacial side reactions, which can greatly improve the Coulombic efficiency, cycle life, and safety of batteries.

In a first aspect, the present application provides an electrolyte, and the electrolyte comprises a combination of an alkali metal salt and a solvent; the solvent comprises a combination of an ionic liquid, a low-polar solvent, and an inert diluent; the low-polar solvent is selected from any one or a combination of at least two of compounds having the following structures: 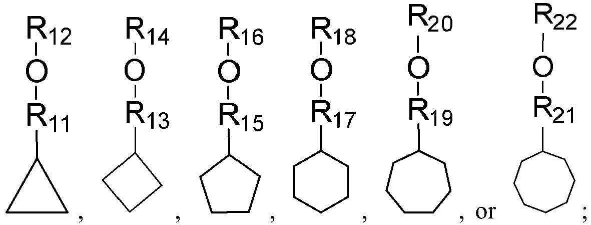 wherein R₁₁, R₁₃, R₁₅, R₁₇, R₁₉, and R₂₁ are each independently selected from any one of a single bond, a substituted or unsubstituted, linear or branched, C1-C10 alkylidene group, or a substituted or unsubstituted, C3-C10 cycloalkylidene group; in a case where R₁₁, R₁₃, R₁₅, R₁₇, R₁₉, and R₂₁ are single bonds, the oxygen atom is directly linked to the cycloalkane.

R₁₂, R₁₄, R₁₆, R₁₈, R₂₀, and R₂₂ are each independently selected from any one of a substituted or unsubstituted, linear or branched, C1-C10 alkyl group, or a substituted or unsubstituted, C3-C10 cycloalkyl group.

Substituents for the substitution in R₁₁, R₁₂, R₁₃, R₁₄, R₁₅, R₁₆, R₁₇, R₁₈, R₁₉, R₂₀, R₂₁, and R₂₂ are each independently selected from at least one of a deuterium atom, a halogen, a nitro group, an amino group, a carboxyl group, Z₁-COO-, a linear or branched, C1-C10 alkyl group, a C2-C10 alkenyl group, -O-Z₂, a C6-C30 aryl group, or a C3-C30 heteroaryl group, wherein Z₁ and Z₂ are each independently selected from any one of a linear or branched, C1-C10 alkyl group.

For the electrolyte provided in the present application, the flame-retardant ionic liquid, the low-polar solvent with low viscosity, and the inert diluent are adopted, so that the electrolyte can have good flame retardance, low viscosity, and good wetting behavior, which can effectively solve the problems of high cost, high viscosity, high melting point, low ionic conductivity, poor wetting behavior, etc., of the ionic liquid electrolyte at this stage, and can also promote the prior reduction of anions, and cations in the ionic liquid on the surface of the alkali metal negative electrode to form a SEI film rich in inorganic components such as LiF, Li₂O, and Li₃N and organic components, and can perform an in-situ reparation on the artificial SEI film on the surface of the alkali metal negative electrode when the artificial SEI film is damaged, so as to improve the cycle life of the alkali metal secondary battery, ensure the long-term cycle stability of the battery, and further improve the Coulombic efficiency and safety of the alkali metal secondary battery.

In the present application, the C1-C10 can each independently be C1, C2, C3, C4, C5, C6, C7, C8, C9, or C10.

The C3-C10 can each independently be C3, C4, C5, C6, C7, C8, C9, or C10.

The C2-C10 can each independently be C2, C3, C4, C5, C6, C7, C8, C9, or C10.

The C6-C30 can each independently be C6, C7, C8, C9, C10, C11, C12, C13, C14, C15, C16, C17, C18, C19, C22, C24, C26, C28, C29, or C30, etc.

The C3-C30 can each independently be C3, C4, C5, C6, C7, C8, C9, C10, C11, C12, C13, C14, C15, C16, C17, C18, C19, C22, C24, C26, C28, C29, or C30, etc.

The linear or branched, C1-C10 (e.g., C1, C2, C3, C4, C5, C6, C7, C8, C9, or C10) alkylidene group in the present application exemplarily comprises, but is not limited to: methylidene, ethylidene, n-propylidene, isopropylidene, n-butylidene, isobutylidene, tert-butylidene, n-pentylidene, isopentylidene, neopentylidene, tert-pentylidene, n-hexylidene, n-octylidene, n-heptylidene, n-nonylidene, or n-decylidene, etc.

The C3-C10 (e.g., C3, C4, C5, C6, C7, C8, C9, or C10) cycloalkylidene group in the present application exemplarily comprises, but is not limited to: cyclopropylidene, cyclobutylidene, cyclopentylidene, cyclohexylidene, or adamantylidene, etc.

The linear or branched, C1-C10 (e.g., C1, C2, C3, C4, C5, C6, C7, C8, C9, or C10) alkyl group in the present application exemplarily comprises, but is not limited to: methyl, ethyl, n-propyl, isopropyl, n-butyl, isobutyl, tert-butyl, n-pentyl, isopentyl, neopentyl, tert-pentyl, n-hexyl, n-octyl, n-heptyl, n-nonyl, or n-decyl, etc.

The C3-C10 (e.g., C3, C4, C5, C6, C7, C8, C9, or C10) cycloalkyl group in the present application exemplarily comprises, but is not limited to: cyclopropyl, cyclobutyl, cyclopentyl, cyclohexyl, or adamantyl, etc.

In the present application, the "substituted or unsubstituted" group can have one substituent or a plurality of substituents, and in a case where there are a plurality of substituents (at least 2), the plurality of substituents (at least 2) are the same or different groups; the substituent can be linked at any position in the group where it can be linked. The same expression has the same meaning hereinafter.

The halogen in the present application all can be fluorine, chlorine, bromine, or iodine.

The C2-C10 (e.g., C2, C3, C4, C5, C6, C7, C8, C9, or C10) alkenyl group in the present application exemplarily comprises, but is not limited to: vinyl, propenyl, 1-butenyl, or 1-pentenyl, etc.

The C6-C30 (e.g., C6, C7, C8, C9, C10, C11, C12, C13, C14, C15, C16, C17, C18, C19, C22, C24, C26, C28, C29, or C30) aryl group in the present application exemplarily comprises, but is not limited to: phenyl, biphenyl, terphenyl, naphthyl, anthracyl, phenanthryl, indenyl, fluorenyl, fluoranthenyl, triphenylene, pyrenyl, perylenyl, chrysenyl, naphthacenyl, or benzophenanthryl, etc.

The C3-C30 (e.g., C3, C4, C5, C6, C7, C8, C9, C10, C11, C12, C13, C14, C15, C16, C17, C18, C19, C22, C24, C26, C28, C29, or C30) heteroaryl group in the present application, with a heteroatom comprising O, S, N, P, or B, etc., exemplarily comprises, but is not limited to: furanyl, thienyl, pyrrolyl, pyridyl, pyrazinyl, pyridazinyl, pyrimidinyl, triazinyl, quinolyl, isoquinolyl, quinazolinyl, quinoxalinyl, cinnolinyl, o-phenanthrolinyl, imidazolyl, thiazolyl, oxazolyl, benzimidazolyl, benzothiazolyl, benzoxazolyl, benzofuranyl, benzothienyl, indolyl, dibenzofuranyl, dibenzothienyl, carbazolyl and a derivative thereof (N-phenylcarbazolyl, N-naphthylcarbazolyl, benzocarbazolyl, dibenzocarbazolyl, indolocarbazolyl, or azacarbazolyl, etc.), phenothiazinyl, phenoxazinyl, or hydrogenated acridinyl, etc.

The following is an optional technical solution of the present application, but not a limitation on the technical solution provided in the present application, and the objects and beneficial effects of the present application can be better achieved through the following optional technical solution.

As an optional technical solution, the low-polar solvent comprises any one or a combination of at least two of cyclopropyl methyl ether, cyclobutyl ethyl ether, cyclopentyl methyl ether, cyclopentyl ethyl ether, cyclopentyl propyl ether, cyclohexyl methyl ether, cyclohexyl ethyl ether, cyclopentyl trifluoromethyl ether, cyclohexyl trifluoromethyl ether, cycloheptyl ethyl ether, cyclooctyl propyl ether, or cyclooctyl butyl ether.

In one embodiment, the low-polar solvent in the solvent has a mass percentage of 10-85%, which can be, for example, 10%, 15%, 20%, 25%, 30%, 35%, 40%, 45%, 50%, 55%, 60%, 65%, 70%, 75%, 80%, or 85%, as well as specific point values between any two of the above point values; for reasons of space and brevity, the specific point values comprised in the ranges will not be listed exhaustively in the present application.

In one embodiment, the low-polar solvent in the solvent has a mass percentage of 20-60%, which can be, for example, 20%, 24%, 29%, 34%, 39%, 44%, 49%, 54%, 59%, or 60%, as well as specific point values between any two of the above point values; for reasons of space and brevity, the specific point values comprised in the ranges will not be listed exhaustively in the present application.

In one embodiment, the alkali metal salt comprises any one or a combination of at least two of a lithium salt, a sodium salt, or a potassium salt.

In one embodiment, the lithium salt comprises any one or a combination of at least two of lithium bis(fluorosulfonyl)imide, lithium bis(trifluoromethanesulfonyl)imide, lithium hexafluorophosphate, lithium perchlorate, lithium tetrafluoroborate, lithium bis(oxalate)borate, lithium hexafluoroarsenate, lithium difluoro(oxalate)borate, lithium difluorophosphate, or lithium 4,5-dicyano-2-trifluoromethylimidazole.

In one embodiment, the sodium salt comprises any one or a combination of at least two of sodium bis(fluorosulfonyl)imide, sodium bis(trifluoromethanesulfonyl)imide, sodium hexafluorophosphate, sodium perchlorate, sodium tetrafluoroborate, sodium bis(oxalate)borate, sodium hexafluoroarsenate, sodium difluoro(oxalate)borate, sodium difluorophosphate, or sodium 4,5-dicyano-2-trifluoromethylimidazole.

In one embodiment, the potassium salt comprises any one or a combination of at least two of potassium bis(fluorosulfonyl)imide, potassium bis(trifluoromethanesulfonyl)imide, potassium hexafluorophosphate, potassium perchlorate, potassium tetrafluoroborate, potassium bis(oxalate) borate, potassium hexafluoroarsenate, potassium difluoro(oxalate)borate, potassium difluorophosphate, or potassium 4,5-dicyano-2-trifluoromethylimidazole.

In one embodiment, the alkali metal salt in the electrolyte has a concentration of 0.1-6 mol/L, which can be, for example, 0.1 mol/L, 0.5 mol/L, 1 mol/L, 1.5 mol/L, 2 mol/L, 2.5 mol/L, 3 mol/L, 3.5 mol/L, 4 mol/L, 4.5 mol/L, 5 mol/L, 5.5 mol/L, or 6 mol/L, as well as specific point values between any two of the above point values; for reasons of space and brevity, the specific point values comprised in the ranges will not be listed exhaustively in the present application.

In one embodiment, the alkali metal salt in the electrolyte has a concentration of 0.5-2 mol/L, which can be, for example, 0.5 mol/L, 0.7 mol/L, 0.9 mol/L, 1 mol/L, 1.2 mol/L, 1.4 mol/L, 1.5 mol/L, 1.7 mol/L, 1.9 mol/L, or 2 mol/L, as well as specific point values between any two of the above point values; for reasons of space and brevity, the specific point values comprised in the ranges will not be listed exhaustively in the present application.

In one embodiment, the ionic liquid has a structure of A⁺[B]⁻; wherein A⁺ is selected from any one or a combination of at least two of the following structures: 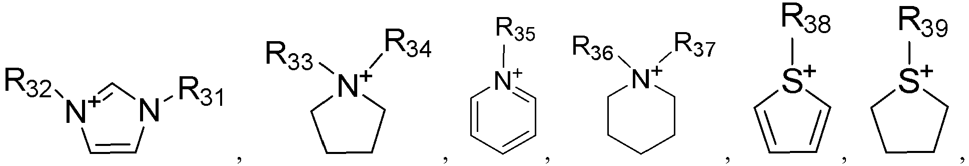 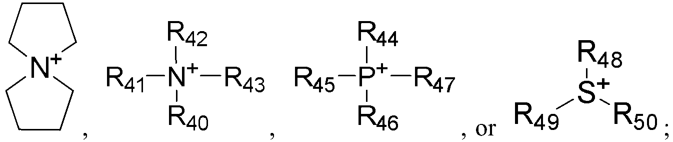 wherein, R₃₁, R₃₂, R₃₃, R₃₄, R₃₅, R₃₆, R₃₇, R₃₈, R₃₉, R₄₀, R₄₁, R₄₂, R₄₃, R₄₄, R₄₅, R₄₆, R₄₇, R₄₈, R₄₉, and R₅₀ are each independently selected from any one of a substituted or unsubstituted, linear or branched, C1-C20 alkyl group, -R'-O-Z₃, -O-Ar₁, an amino group, a substituted or unsubstituted, C6-C12 aryl group, a substituted or unsubstituted, C3-C12 heteroaryl group, a cyano group, a nitro group, or a halogen; Z₃ is selected from any one of a substituted or unsubstituted, linear or branched, C1-C10 alkyl group; R' is selected from any one of a single bond, or a substituted or unsubstituted, linear or branched, C1-C10 alkylidene group, and in a case where R' is a single bond, an oxygen atom is directly linked to N, N⁺, S⁺, or P⁺ by a single bond; Ar₁ is selected from any one of a substituted or unsubstituted, C6-C12 aryl group, or a substituted or unsubstituted, C3-C12 heteroaryl group.

Substituents for the substitution in R₃₁, R₃₂, R₃₃, R₃₄, R₃₅, R₃₆, R₃₇, R₃₈, R₃₉, R₄₀, R₄₁, R₄₂, R₄₃, R₄₄, R₄₅, R₄₆, R₄₇, R₄₈, R₄₉, R₅₀, Z₃, Ar₁, and R' are each independently selected from at least one of halogens.

The combination for A⁺ is formed by the following method: a plurality of same A⁺ structures or different A⁺ structures are linked by carbon-carbon single bonds, wherein the "a plurality of' refers to at least two, and the carbon-carbon single bond is formed after removing one hydrogen atom from each hydrogen-containing carbon atom on R₃₁, R₃₂, R₃₃, R₃₄, R₃₅, R₃₆, R₃₇, R₃₈, R₃₉, R₄₀, R₄₁, R₄₂, R₄₃, R₄₄, R₄₅, R₄₆, R₄₇, R₄₈, R₄₉, and R₅₀, and exemplarily, A⁺ comprises, but is not limited to, the following structures: 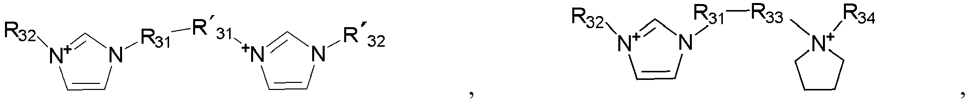 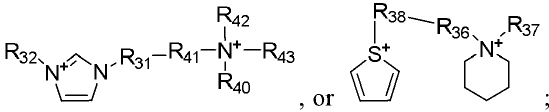 wherein R₃₁ and R'₃₁ can be the same or different, and R₃₂ and R'₃₂ can be the same or different.

The C1-C20 can each independently be C1, C2, C3, C4, C5, C6, C7, C8, C9, C10, C11, C12, C13, C14, C15, C16, C17, C18, C19, or C20.

The C3-C12 (e.g., C3, C4, C5, C6, C7, C8, C9, C10, C11, or C12) heteroaryl group exemplarily comprises, but is not limited to: thienyl, benzothienyl, thienoimidazol, thienofuranyl, or thiazinyl, etc.

The C6-C12 can each independently be C6, C7, C8, C9, C10, C11, or C12.

The C1-C10 can each independently be C1, C2, C3, C4, C5, C6, C7, C8, C9, or C10.

The C3-C12 can each independently be C3, C4, C5, C6, C7, C8, C9, C10, C11, C12, or C13.

[B] is selected from any one or a combination of at least two of FSI⁻, TFSI⁻, BF₄⁻, PF₆⁻, PF₂O₂⁻, NO₃⁻, CF₃SO₃⁻, BOB⁻, or DFOB⁻.

In one embodiment, the A⁺ comprises any one or a combination of at least two of the following cations: 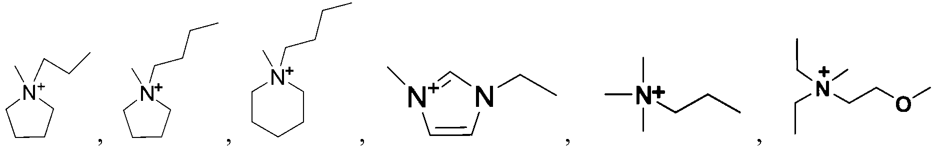 or

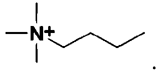

In one embodiment, the ionic liquid in the solvent has a mass percentage of 10-85%, which can be, for example, 10%, 15%, 20%, 25%, 30%, 35%, 40%, 45%, 50%, 55%, 60%, 65%, 70%, 75%, 80%, or 85%, as well as specific point values between any two of the above point values; for reasons of space and brevity, the specific point values comprised in the ranges will not be listed exhaustively in the present application.

In one embodiment, the ionic liquid in the solvent has a mass percentage of 30-70%, which can be, for example, 30%, 34%, 39%, 44%, 49%, 54%, 59%, 64%, or 70%, as well as specific point values between any two of the above point values; for reasons of space and brevity, the specific point values comprised in the ranges will not be listed exhaustively in the present application.

In one embodiment, the inert diluent comprises any one or a combination of at least two of a halogenated ether, a halogenated benzene, or an alkyl halide.

In one embodiment, the halogenated ether comprises any one or a combination of at least two of 1,1,1,3,3,3-hexafluoroisopropyl methyl ether, 2,2,2-trifluoroethyl ether, 1,1,2,2-tetrafluoroethyl -2,2,3,3-tetrafluoropropyl ether, 2,2,2-trifluoroethyl methyl ether, 1,1,2,2-tetrafluoroethyl ethyl ether, 1,1,2,2-tetrafluoroethyl-2,2,2-trifluoroethyl ether, methyl nonafluorobutyl ether, or ethyl nonafluorobutyl ether.

In one embodiment, the halogenated benzene comprises fluorobenzene and/or 1,2-difluorobenzene.

In one embodiment, the alkyl halide comprises any one or a combination of at least two of dichloromethane, dichloroethane, dichloropropane, dichlorobutane, chloroform, trichloropropane, monochlorodifluoromethane, dichloromonofluoromethane, or difluoromethane.

In one embodiment, the inert diluent in the solvent has a mass percentage of 5-60%, which can be, for example, 5%, 10%, 15%, 20%, 25%, 30%, 35%, 40%, 45%, 50%, 55%, or 60%, as well as specific point values between any two of the above point values; for reasons of space and brevity, the specific point values comprised in the ranges will not be listed exhaustively in the present application.

In one embodiment, the inert diluent in the solvent has a mass percentage of 10-50%, which can be, for example, 10%, 14%, 19%, 24%, 29%, 34%, 39%, 44%, or 50%, as well as specific point values between any two of the above point values; for reasons of space and brevity, the specific point values comprised in the ranges will not be listed exhaustively in the present application.

In a second aspect, the present application provides an alkali metal secondary battery, and the alkali metal secondary battery comprises a negative electrode, a positive electrode, the electrolyte as described in the first aspect, and a separator.

In one embodiment, the negative electrode comprises an alkali metal negative electrode and a negative current collector.

In one embodiment, the alkali metal negative electrode comprises any one of lithium, sodium, or potassium.

In one embodiment, the negative current collector comprises any one of a copper foil, a nickel foil, or a nickel-plated steel strip.

In one embodiment, a poly(ionic liquid) artificial SEI film is coated on the outer surface of the alkali metal negative electrode.

In one embodiment, the poly(ionic liquid) artificial SEI film has a thickness of 2-2000 nm, which can be, for example, 2 nm, 30 nm, 50 nm, 80 nm, 100 nm, 200 nm, 500 nm, 800 nm, 1000 nm, 1200 nm, 1500 nm, 1800 nm, or 2000 nm, as well as specific point values between any two of the above point values; for reasons of space and brevity, the specific point values comprised in the ranges will not be listed exhaustively in the present application.

In one embodiment, a material of the poly(ionic liquid) artificial SEI film has a structure as shown in Formula I, Formula II, or Formula III:

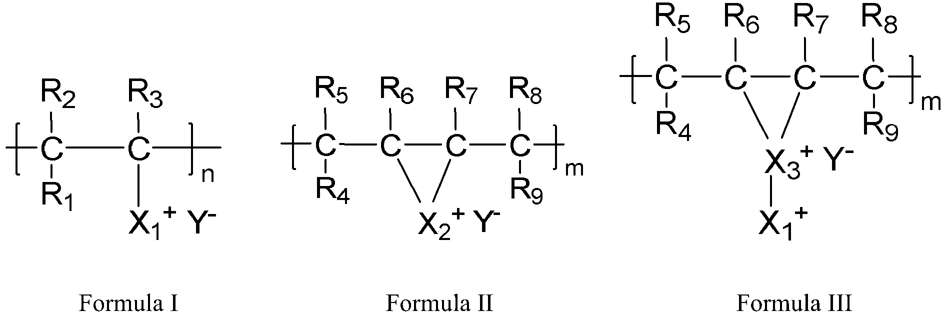

In the Formula I, Formula II, and Formula III, R₁, R₂, R₃, R₄, R₅, R₆, R₇, R₈, and R₉ are each independently selected from any one of a hydrogen atom, a substituted or unsubstituted, linear or branched, C1-C10 alkyl group, -O-Z₄, -O-Ar₂, an amino group, a substituted or unsubstituted, C3-C12 heteraryl group, a substituted or unsubstituted, C6-C12 aryl group, a cyano group, a nitro group, or a halogen; Z₄ is selected from any one of a substituted or unsubstituted, linear or branched, C1-C10 alkyl group; Ar₂ is selected from any one of a substituted or unsubstituted, C6-C12 aryl group, or a substituted or unsubstituted, C3-C12 heteroaryl group.

Substituents for the substitution in R₁, R₂, R₃, R₄, R₅, R₆, R₇, R₈, R₉, Z₄, and Ar₂ are each independently selected from at least one of halogens.

X₁⁺ is selected from any one or a combination of at least two of the following structures: 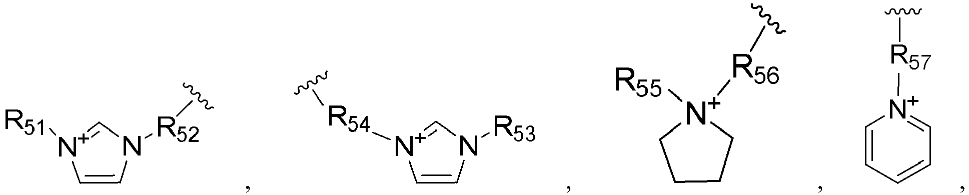 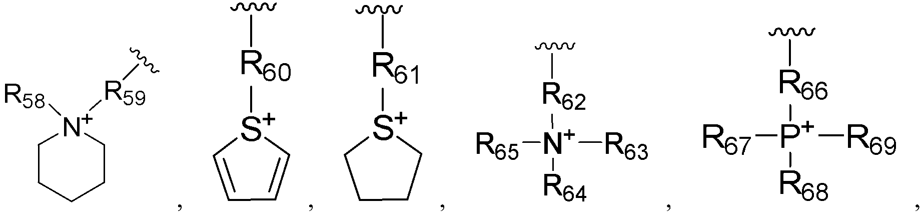 or

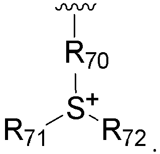

The combination for X₁⁺ is formed by the following method: a plurality of same X₁⁺ structures or different X₁⁺ structures are linked by carbon-carbon single bonds, wherein the "a plurality of" refers to at least two, and any one of hydrogen-containing carbon atoms in R₅₁, R₅₃, R₅₅, R₅₈, R₆₃, R₆₄, R₆₅, R₆₇, R₆₈, R₆₉, R₇₁, or R₇₂ having one hydrogen atom removed links to any linkage site of R₅₂, R₅₄, R₅₆, R₅₇, R₅₉, R₆₀, R₆₁, R₆₂, R₆₆, or R₇₀ to form the carbon-carbon single bond, and exemplarily, X₁⁺ comprises, but is not limited to, the following structures: 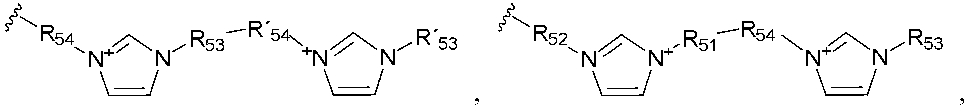 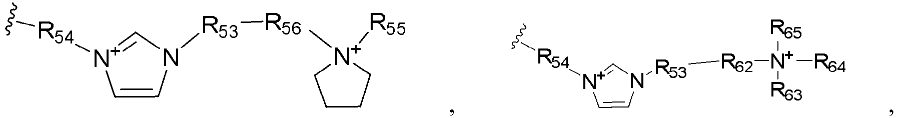 or 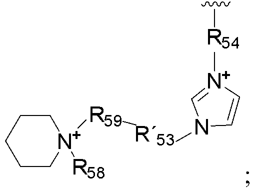 wherein, R₅₄ and R'₅₄ can be the same or different, and R₅₃ and R'₅₃ can be the same or different.

X₂⁺ is selected from any one of the following structures:

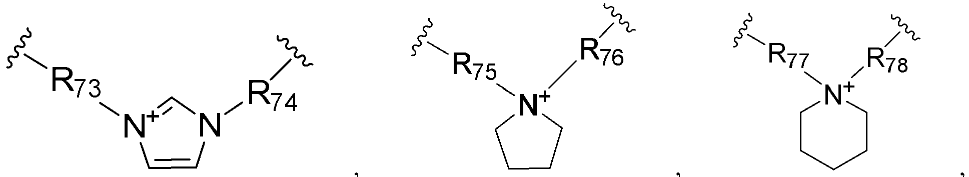

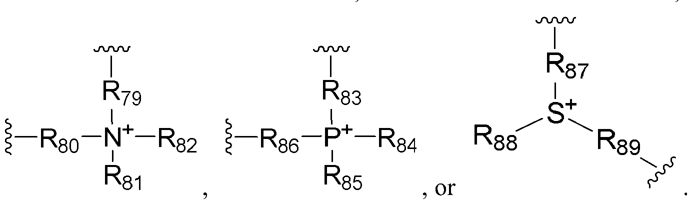

X₃⁺ is selected from any one of the following structures: 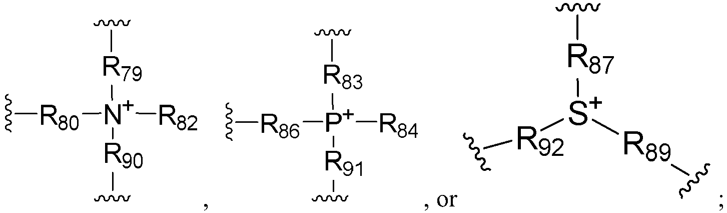 in the structure, 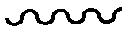 represents a linkage site of the group.

R₅₁, R₅₃, R₅₅, R₅₈, R₆₃, R₆₄, R₆₅, R₆₇, R₆₈, R₆₉, R₇₁, R₇₂, R₈₁, R₈₂, R₈₄, R₈₅, or R₈₈ are each independently selected from any one of a substituted or unsubstituted, linear or branched, C1-C20 alkyl group, -O-Z₅, -O-Ar₃, an amino group, a substituted or unsubstituted, C3-C12 heteroaryl group, a substituted or unsubstituted, C6-C12 aryl group, a cyano group, a nitro group, or a halogen; Z₅ is selected from any one of a substituted or unsubstituted, linear or branched, C1-C10 alkyl group; Ar₃ is selected from any one of a substituted or unsubstituted, C6-C12 aryl group, or a substituted or unsubstituted, C3-C12 heteroaryl group.

R₅₂, R₅₄, R₅₆, R₅₇, R₅₉, R₆₀, R₆₁, R₆₂, R₆₆, R₇₀, R₇₃, R₇₄, R₇₅, R₇₆, R₇₇, R₇₈, R₇₉, R₈₀, R₈₃, R₈₆, R₈₇, R₈₉, R₉₀, R₉₁, and R₉₂ are each independently selected from any one of a single bond, a substituted or unsubstituted, linear or branched, C1-C20 alkylidene group, -O-Z₆-, -O-Ar₄-, -Z₇-Ar₅-, an imino group, a substituted or unsubstituted, C3-C12 heteroarylidene group, or a substituted or unsubstituted, C6-C12 arylidene group. In a case where R₅₂, R₅₄, R₅₆, R₅₇, R₅₉, R₆₀, R₆₁, R₆₂, R₆₆, R₇₀, R₇₃, R₇₄, R₇₅, R₇₆, R₇₇, R₇₈, R₇₉, R₈₀, R₈₃, R₈₆, R₈₇, R₈₉, R₉₀, R₉₁, and R₉₂ are single bonds, heteroatoms or heteroatom-cations are directly linked to the main chain in brackets.

Z₆ and Z₇ are each independently selected from any one of a substituted or unsubstituted, linear or branched, C1-C10 alkylidene group.

Ar₄ and Ar₅ are each independently selected from any one of a substituted or unsubstituted, C6-C12 arylidene group, or a substituted or unsubstituted, C3-C12 heteroarylidene group.

Substituents for the substitution in R₅₁, R₅₂, R₅₃, R₅₄, R₅₅, R₅₆, R₅₇, R₅₈, R₅₉, R₆₀, R₆₁, R₆₂, R₆₃, R₆₄, R₆₅, R₆₆, R₆₇, R₆₈, R₆₉, R₇₀, R₇₁, R₇₂, R₇₃, R₇₄, R₇₅, R₇₆, R₇₇, R₇₈, R₇₉, R₈₀, R₈₁, R₈₂, R₈₃, R₈₄, R₈₅, R₈₆, R₈₇, R₈₈, R₈₉, R₉₀, R₉₁, R₉₂, Z₅, Z₆, Z₇, Ar₃, Ar₄, or Ar₅ are each independently selected from at least one of halogens.

Y⁻ is selected from any one or a combination of at least two of FSI⁻, TFSI⁻, BF₄⁻, PF₆⁻, PF₂O₂⁻, NO₃⁻, CF₃SO₃⁻, BOB⁻, or DFOB⁻.

The n and m are each independently selected from integers from 1 to 100000, which can be, for example, 1, 50, 100, 150, 200, 250, 300, 350, 400, 450, 500, 550, 600, 650, 700, 750, 800, 850, 900, 950, 1000, 10000, 50000, 80000, or 100000, as well as specific point values between any two of the above point values; for reasons of space and brevity, the specific point values comprised in the ranges will not be listed exhaustively in the present application.

In one embodiment, a material of the poly(ionic liquid) artificial SEI film comprises any one or a combination of at least two of the following compounds: 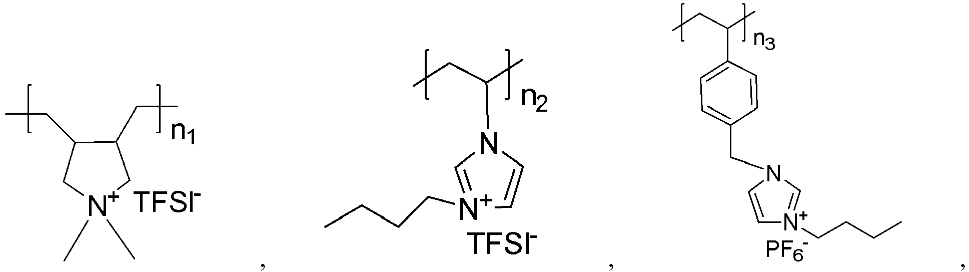 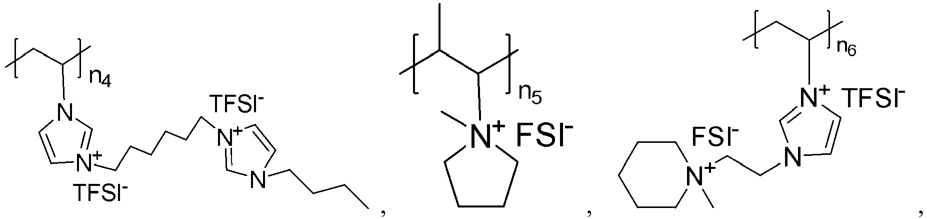 or 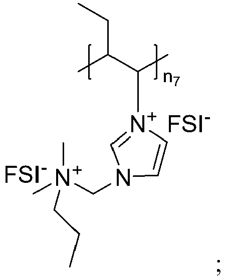 wherein n₁, n₂, n₃, n₄, n₅, n₆, and n₇ are each independently selected from integers from 1 to 100000.

In the material of the poly(ionic liquid) artificial SEI film of the present application, the polycation, i.e., the part left after the anion is removed, can be purchased in the form of a polycation salt, and subsequently, the polycation salt is used to prepare the material of the poly(ionic liquid) artificial SEI film by experiments, and the preparation method comprises: dropping a LiY aqueous solution into a polycation salt aqueous solution and performing a reaction to obtain a solid, washing the solid with water, and drying to obtain the material of the poly(ionic liquid) artificial SEI film; a mass fraction of LiY in the LiY aqueous solution is 1-10%; a mass fraction of the polycation salt in the polycation salt aqueous solution is 0.2-5%; a molar ratio of the LiY to the polycation salt is n:1, wherein n is the polymerization degree of the polycation salt; the reaction is performed for a period of 5-10 h; the drying is performed at a temperature of 70-100 °C; the drying is performed for a period of 24-72 h; the Y⁻ in the LiY has the same definition as the Y⁻ in the material of the poly(ionic liquid) artificial SEI film provided in the present application.

In the present application, the poly(ionic liquid) containing cation groups is used as an artificial SEI film on the surface of the alkali metal negative electrode, which not only has excellent ionic conductivity and flexibility, but also can homogenize the ion distribution on the surface of the alkali metal negative electrode through the electrostatic shielding effect of the cation groups on the polymer framework, thereby inducing uniform deposition behavior of ions and effectively inhibiting the growth of metal dendrites.

In one embodiment, a positive electrode active material of the positive electrode comprises any one of lithium cobalt oxide, lithium manganese oxide, a ternary positive electrode material, a lithium-rich manganese-based positive electrode material, a nickel-manganese positive electrode material, lithium iron phosphate, lithium manganese phosphate, or a sulfur-based positive electrode material.

In one embodiment, the ternary positive electrode material comprises LiNi_{0.9}Co_{0.05}Mn_{0.05}O₂, LiNi_{0.8}Co_{0.1}Mn_{0.1}O₂, LiNi_{0.6}Co_{0.2}Mn_{0.2}O₂, or LiNi_{0.5}Co_{0.2}Mn_{0.3}O₂.

In one embodiment, the nickel-manganese positive electrode material comprises LiNi_{0.5}Mn_{0.5}O₂, LiNi_{0.5}Mn_{1.5}O₄, or LiNiMnCoO₂.

In one embodiment, the sulfur-based positive electrode material comprises any one of elemental sulfur, lithium sulfide, lithium polysulfide, a sulfur/carbon composite material, a lithium sulfide/carbon composite material, a sulfur/polymer composite material, or a lithium polysulfide/carbon composite material.

In one embodiment, the sulfur/polymer composite material comprises a sulfide poly(acrylonitrile), a sulfide poly(vinyl cyanide), or a sulfide polyimide.

In one embodiment, the separator comprises a glass fiber membrane, a cellulose membrane, and a porous polyolefin membrane.

In one embodiment, the porous polyolefin membrane comprises a polypropylene separator, a polyethylene separator, and a polytetrafluoroethylene membrane.

In one embodiment, the alkali metal secondary battery further comprises a tab.

Compared with the prior art, the present application has the following beneficial effects:
(1) the electrolyte provided in the present application has low viscosity and good flame retardance, and wetting behavior, and can also perform an in-situ reparation on the surface of the alkali metal negative electrode when the artificial SEI film is damaged, thereby ensuring the long-term cycle stability of the battery; and
(2) the alkali metal secondary battery provided in the present application, which employs the above electrolyte and the poly(ionic liquid) artificial SEI film, has a long cycle life, high Coulombic efficiency, and good safety, and after 100 cycles, the average Coulombic efficiency can reach 99.7-99.9% and the capacity retention is 98.1-99.8%.

Other aspects will be appreciated upon reading and understanding the accompanying drawings and detailed description.

### BRIEF DESCRIPTION OF DRAWINGS

The accompanying drawings are used to provide a further understanding of the technical solutions herein, and form a part of the specification, which are used together with embodiments of the present application to explain the technical solutions herein, and do not constitute a limitation on the technical solutions herein.
FIG. 1 is an internal structural schematic diagram of the alkali metal secondary battery provided in the present application; and
FIG. 2 shows a hydrogen nuclear magnetic resonance spectrum of PDDATFSI-1.

### DETAILED DESCRIPTION

The technical solutions of the present application are further elaborated by the following specific embodiments combined with the accompanying drawings. Those skilled in the field should understand that the examples are merely used for a better understanding of the present application and should not be regarded as a specific limitation to the present application.

The materials in the present application are all commercially available except for the materials of poly(ionic liquid) artificial SEI film, and the sources of a part of components in the following examples and comparative examples are described below:
(1) material PDDATFSI-1 of poly(ionic liquid) artificial SEI film, which has a structural formula of 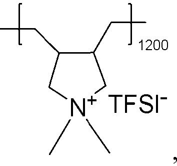 and the preparation method comprises:
   2 g of LiTFSI salt was completely dissolved in 50 mL of deionized water for later use, and then 5.63 g of a poly(dimethyl diallyl ammonium chloride) (PDDACl) solution (20 wt% aqueous solution, a molecular mass of 200000, purchased from Adamas) and 200 mL of deionized water were mixed and stirred; the LiTFSI aqueous solution was added dropwise during the stirring process for reaction, at this moment, white flocculent solid was gradually precipitated from the solution, the reaction was performed for 6 h, and the white solid was quickly settled in the container after the stirring was stopped, the liquid was removed after standing for 10 min, and the white solid was remained, and washed with deionized water for 5-6 times until no obvious precipitates were formed in the washing liquid added with an AgNO₃ aqueous solution, i.e., being completely cleaned; finally, the white solid was collected by a suction filter and dried in an oven at 80 °C for 48 h to obtain the dried white solid, and the dried white solid was ground into powder with a mortar to obtain PDDATFSI-1;
(2) material PDDATFSI of poly(ionic liquid) artificial SEI film, which has a structural formula of 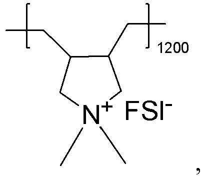 and the preparation steps thereof differs from those of the above PDDATFSI-1 only in that the LiTFSI aqueous solution was replaced with an equal amount of LiFSI aqueous solution with the same formulation proportion, and other raw materials, process steps, and parameters were the same as those of PDDATFSI-1;
(3) material PDDATFSI-2 of poly(ionic liquid) artificial SEI film, which has a structural formula of 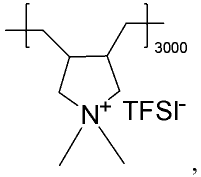 the preparation steps thereof differs from those of the above PDDATFSI-1 only in that the poly(dimethyl diallyl ammonium chloride) solution (PDDACl) (20 wt% aqueous solution, a molecular mass of 200000, purchased from Adamas) was replaced with an equal amount of poly(dimethyl diallyl ammonium chloride) solution (PDDACl) (20 wt% aqueous solution, a molecular mass of 500000, purchased from Adamas), and other raw materials, process steps, and parameters were the same as those of PDDATFSI-1;
(4) material PDDATFSI-3 of poly(ionic liquid) artificial SEI film, which has a structural formula of 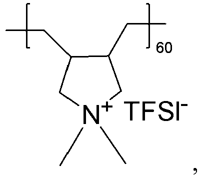 the preparation steps thereof differs from those of the above PDDATFSI-1 only in that the poly(dimethyl diallyl ammonium chloride) solution (PDDACl) (20 wt% aqueous solution, a molecular mass of 200000, purchased from Adamas) was replaced with an equal amount of poly(dimethyl diallyl ammonium chloride) solution (PDDACl) (20 wt% aqueous solution, a molecular mass of 10000, purchased from Adamas), and other raw materials, process steps, and parameters were the same as those of PDDATFSI-1;
(5) N-methyl-N-propyl pyrrolidinium bis(fluorosulfonyl)imide: purchased from Cheng jie ionic liquid;
(6) N-methyl-N-butyl piperidinium bis(fluorosulfonyl)imide: purchased from Cheng jie ionic liquid;
(7) N-methyl-N-butyl pyrrolidinium bis(fluorosulfonyl)imide: purchased from Cheng jie ionic liquid;
(8) N-methyl-N-propyl pyrrolidinium bis((trifluoromethyl)sulfonyl)imide: purchased from Cheng jie ionic liquid; and
(9) polyethylene oxide: purchased from Adamas.

### Example 1

An electrolyte, and a preparation method of the electrolyte comprises: in a glove box protected by an inert gas, LiTFSI was dissolved in 4 g of N-methyl-N-propyl pyrrolidinium bis(fluorosulfonyl)imide, 3 g of cyclopentyl methyl ether, and 3 g of 1,1,2,2-tetrafluoroethyl-2,2,3,3-tetrafluoropropyl ether, and stirred until the lithium salt was completely dissolved to obtain a clear and transparent electrolyte, and LiTFSI in the electrolyte had a concentration of 1 moL/L.

Preparation of a lithium metal negative electrode having the poly(ionic liquid) artificial SEI film coated on the outer surface: PDDATFSI-1 was dissolved in NMP (N-methyl pyrrolidone) solvent under dry conditions (H₂O < 1 ppm), then evenly coated on the surface of lithium metal negative electrode, and subjected to vacuum drying at 80 °C to remove NMP solvent to obtain the lithium metal negative electrode having the poly(ionic liquid) artificial SEI film coated on the outer surface, and the poly(ionic liquid) artificial SEI film had a thickness of 20 nm.

Preparation of a positive electrode piece: under dry conditions, the poly(vinylidene fluoride) with a mass percentage of 5% was fully dissolved in NMP, conductive carbon black with a mass percentage of 5% and lithium iron phosphate with a mass percentage of 90% were added to the above solution and mixed evenly, the prepared slurry was evenly coated on an aluminum foil, dried, roller-pressed, and cut to obtain the positive electrode piece.

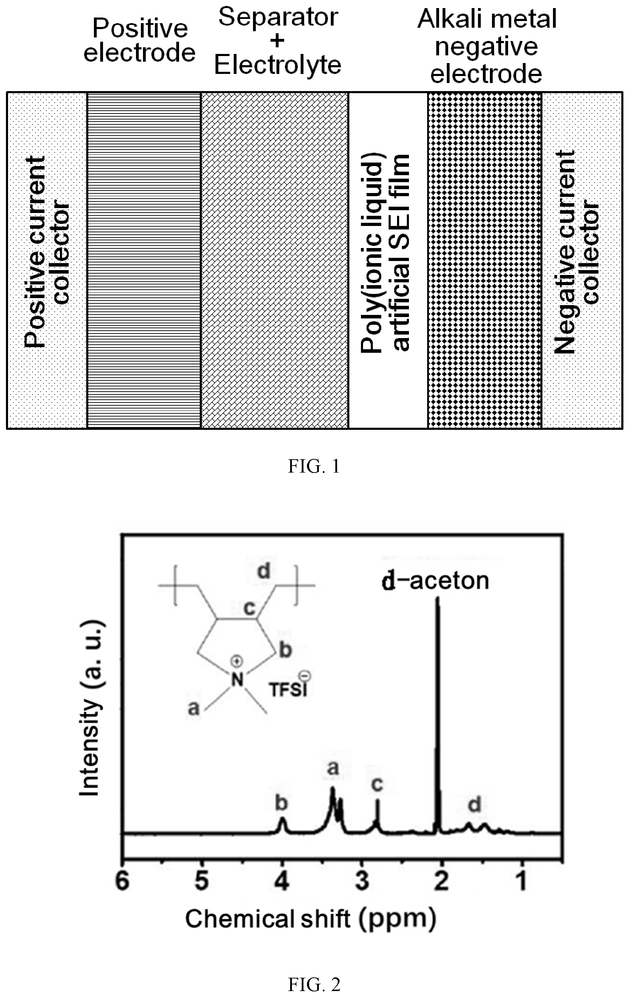

A lithium metal secondary battery, and an internal structure of the lithium metal secondary battery is shown in FIG. 1, and the internal structure of the alkali metal secondary battery comprises a positive current collector, a negative current collector, a positive electrode, a separator, a lithium metal negative electrode coated with a poly(ionic liquid) artificial SEI film, and an electrolyte. The preparation of the lithium metal secondary battery comprises: the lithium metal negative electrode having the poly(ionic liquid) artificial SEI film coated on the outer surface and the positive electrode piece prepared above were used and matched with a polypropylene separator to assemble the lithium metal secondary battery cell; metal aluminum and metal nickel were used as a positive tab and a negative tab, respectively, the exterior was encapsulated with an aluminum-plastic film, and finally the electrolyte prepared above was injected, and after the sealing was completed, the lithium metal secondary battery was obtained.

### Example 2

An electrolyte, the electrolyte is the same as the electrolyte provided in Example 1.

A lithium metal secondary battery, which differs from Example 1 only in that the material of the poly(ionic liquid) artificial SEI film was PDDAFSI, and other components were the same as those in Example 1.

### Example 3

An electrolyte, the electrolyte is the same as the electrolyte provided in Example 1.

A lithium metal secondary battery, which differs from Example 1 only in that the material of the poly(ionic liquid) artificial SEI film was PDDATFSI-2, and other components were the same as those in Example 1.

### Example 4

An electrolyte, the electrolyte is the same as the electrolyte provided in Example 1.

A lithium metal secondary battery, which differs from Example 1 only in that the material of the poly(ionic liquid) artificial SEI film was PDDATFSI-3, and other components were the same as those in Example 1.

### Example 5

An electrolyte, which differs from Example 1 only in that the electrolyte was composed of LiTFSI, 3 g of N-methyl-N-butyl piperidinium bis(fluorosulfonyl)imide, 2 g of cyclohexyl methyl ether, and 5 g of 1,1,2,2-tetrafluoroethyl-2,2,3,3-tetrafluoropropyl ether, and a concentration of LiTFSI in the electrolyte was 1 mol/L, and the other preparation processes were the same as those of Example 1.

A lithium metal secondary battery, which differs from Example 1 only in that the electrolyte of the lithium metal secondary battery was the electrolyte provided in this example, and other components were the same as those in Example 1.

### Example 6

An electrolyte, which differs from Example 1 only in that the electrolyte was composed of LiDFOB, 7 g of N-methyl-N-butyl pyrrolidinium bis(fluorosulfonyl)imide, 2 g of cyclobutyl methyl ether, and 1 g of 1,1,2,2-tetrafluoroethyl-2,2,3,3-tetrafluoropropyl ether, and a concentration of LiDFOB in the electrolyte was 0.5 mol/L, and the other preparation processes were the same as those of Example 1.

A lithium metal secondary battery, which differs from Example 1 only in that the electrolyte of the lithium metal secondary battery was the electrolyte provided in this example, and other components were the same as those in Example 1.

### Example 7

An electrolyte, which differs from Example 1 only in that the electrolyte was composed of LiTFSI, 6 g of N-methyl-N-propyl pyrrolidinium bis((trifluoromethyl)sulfonyl)imide, 2 g of cyclobutyl methyl ether, and 2 g of 1,2-difluorobenzene, and a concentration of LiTFSI in the electrolyte was 2 mol/L, and the other preparation processes were the same as those of Example 1.

A lithium metal secondary battery, which differs from Example 1 only in that the electrolyte of the lithium metal secondary battery was the electrolyte provided in this example, and other components were the same as those in Example 1.

### Example 8

An electrolyte, the electrolyte is the same as the electrolyte provided in Example 1.

A lithium metal secondary battery, which differs from Example 1 only in that the outer surface of the lithium metal negative electrode was not coated with a poly(ionic liquid) artificial SEI film.

### Comparative Example 1

An electrolyte, which differs from Example 1 only in that the electrolyte was composed of LiTFSI and 10 g of N-methyl-N-propyl pyrrolidinium bis(fluorosulfonyl)imide, and a concentration of LiTFSI in the electrolyte was 1 mol/L, and the other preparation processes were the same as those of Example 1.

A lithium metal secondary battery, which differs from Example 1 only in that the electrolyte of the lithium metal secondary battery was the electrolyte provided in this comparative example, and other components were the same as those in Example 1.

### Comparative Example 2

An electrolyte, which differs from Example 1 only in that the electrolyte was composed of LiTFSI, 7 g of N-methyl-N-propyl pyrrolidinium bis(fluorosulfonyl)imide, and 3 g of 1,1,2,2-tetrafluoroethyl-2,2,3,3-tetrafluoropropyl ether, and a concentration of LiTFSI in the electrolyte was 1 mol/L, and the other preparation processes were the same as those of Example 1.

A lithium metal secondary battery, which differs from Example 1 only in that the electrolyte of the lithium metal secondary battery was the electrolyte provided in this comparative example, and other components were the same as those in Example 1.

### Comparative Example 3

An electrolyte, which differs from Example 1 only in that the electrolyte was composed of LiTFSI, 3 g of ethylene carbonate, and 7 g of dimethyl carbonate, and a concentration of LiTFSI in the electrolyte was 1 mol/L, and the other preparation processes were the same as those of Example 1.

A lithium metal secondary battery, which differs from Example 1 only in that the electrolyte of the lithium metal secondary battery was the electrolyte provided in this comparative example, and other components were the same as those in Example 1.

### Comparative Example 4

An electrolyte, which differs from Example 1 only in that 3 g of cyclopentyl methyl ether was replaced with 3 g of ethylene glycol dimethyl ether, and the other preparation processes were the same as those of Example 1.

A lithium metal secondary battery, which differs from Example 1 only in that the electrolyte of the lithium metal secondary battery was the electrolyte provided in this comparative example, and other components were the same as those in Example 1.

### Comparative Example 5

An electrolyte, the electrolyte is the same as the electrolyte provided in Example 1.

A lithium metal secondary battery, which differs from Example 1 only in that the material of the poly(ionic liquid) artificial SEI film was poly(ethylene oxide) (PEO), and other components were the same as those in Example 1.

### Performance test

(1) Hydrogen nuclear magnetic resonance spectrum test: PDDATFSI-1 was tested by a nuclear magnetic resonance spectrometer (Varian-400 MHz), and the test result is shown in the hydrogen nuclear magnetic resonance spectrum of PDDATFSI-1 in FIG. 2, which shows that the four peaks, a, b, c, and d, are assigned to hydrogens at the corresponding positions labeled in the chemical structure, the area and position of the peaks can well correlate to the target structure by comparison, indicating that the substance is consistent with the target structure and no impurities are involved; and
(2) the lithium metal secondary batteries provided in Examples 1-8 and Comparative Examples 1-5 were subjected to an electrochemical performance test at a test voltage of 2.5-4.0 V and a cycle rate of 0.2 C. The test results are shown in Table 1.

**Table 1**

| No. | First-cycle discharge specific capacity (mA h/g) | First-cycle Coulombic efficiency (%) | Capacity retention rate after 100 cycles (%) | Average Coulombic efficiency (%) |
|---|---|---|---|---|
| Example 1 | 152.8 | 98.5% | 99.5% | 99.9% |
| Example 2 | 151.2 | 98.2% | 98.8% | 99.9% |
| Example 3 | 149.7 | 98.3% | 98.9% | 99.8% |
| Example 4 | 152.1 | 97.9% | 98.1% | 99.7% |
| Example 5 | 152.6 | 98.4% | 99.3% | 99.9% |
| Example 6 | 145.8 | 98.8% | 99.5% | 99.8% |
| Example 7 | 144.2 | 97.6% | 99.8% | 99.9% |
| Example 8 | 151.9 | 94.2% | 89.2% | 99.2% |
| Comparative Example 1 | 140.2 | 98.1% | 98.8% | 99.8% |
| Comparative Example 2 | 143.2 | 97.8% | 98.9% | 99.7% |
| Comparative Example 3 | 152.5 | 95.1% | 87.9% | 98.5% |
| Comparative Example 4 | 151.2 | 94.1% | 92.1% | 99.2% |
| Comparative Example 5 | 145.1 | 95.2% | 88.1% | 99.4% |

From the test data of Examples 1-7 in Table 1, it can be seen that the lithium metal secondary battery provided by the present application has high Coulombic efficiency and high capacity retention after 100 cycles. It can be found from the comparison of Comparative Examples 1 and 2 with Example 1 that the addition of the low-polar solvent and the inert diluent to the ionic liquid can effectively reduce the viscosity of the electrolyte, thereby better improving the discharge specific capacity of the battery.

It can be found from the comparison of Comparative Example 3 and Example 1 that the average Coulombic efficiency and capacity retention of the battery are lower due to the serious side reactions that occurred between the carbonate ester electrolyte and the lithium metal negative electrode, further indicating that under the same condition of battery structure, the use of the electrolyte provided in the present application can effectively reduce the side reactions on the surface of the lithium metal negative electrode, and thus improve the performance of the battery.

It can be found from the comparison of Example 1 and Comparative Example 4 that compared with the electrolyte added with a strong-polar linear ether solvent, the electrolyte prepared with a low-polar ether solvent containing a large volume of cyclic hydrocarbons can effectively improve the Coulombic efficiency and capacity retention of the battery, indicating that the low-polar ether solvent provided in the present application can effectively reduce the electrode interfacial side reactions and improve the interfacial stability.

It can be seen from the comparison of Example 1 with Example 8 and Comparative Example 5 that the battery using the lithium metal negative electrode without poly(ionic liquid) artificial SEI film coated and the battery using the lithium metal negative electrode with PEO coated both have low first-cycle Coulombic efficiency and low capacity retention, indicating that the lithium metal negative electrode coated with poly(ionic liquid) artificial SEI film can effectively inhibit the interface reaction between the electrolyte and the electrode, and at the same time, due to the high ionic conductivity of the poly(ionic liquid) artificial SEI film, the high capacity, high Coulombic efficiency, and excellent cycle stability of the battery can be ensured.

The applicant declares that the detailed process steps in the present application are illustrated by the above examples in the present application, but the present application is not limited to the detailed process steps, that is, the present application does not necessarily rely on the above detailed process steps to be implemented. Those skilled in the art should understand that any improvements of the present application, the equivalent substitution of raw materials, the addition of auxiliary ingredients, and the selection of specific methods of the products in the present application shall fall within the protection scope and disclosure scope of the present application.

## Claims

1. An electrolyte, comprising a combination of an alkali metal salt and a solvent;
the solvent comprises a combination of an ionic liquid, a low-polar solvent, and an inert diluent;
the low-polar solvent is selected from any one or a combination of at least two of compounds with the following structures: 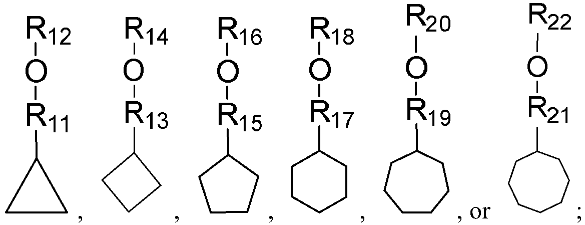
in the structures, R₁₁, R₁₃, R₁₅, R₁₇, R₁₉, and R₂₁ are each independently selected from any one of a single bond, a substituted or unsubstituted, linear or branched, C1-C10 alkylidene group, or a substituted or unsubstituted, C3-C10 cycloalkylidene group;
R₁₂, R₁₄, R₁₆, R₁₈, R₂₀, and R₂₂ are each independently selected from any one of a substituted or unsubstituted, linear or branched, C1-C10 alkyl group, or a substituted or unsubstituted, C3-C10 cycloalkyl group;
substituents for the substitution in R₁₁, R₁₂, R₁₃, R₁₄, R₁₅, R₁₆, R₁₇, R₁₈, R₁₉, R₂₀, R₂₁, and R₂₂ are each independently selected from at least one of a deuterium atom, a halogen, a nitro group, an amino group, a carboxyl group, Z₁-COO-, a linear or branched, C1-C10 alkyl group, a C2-C10 alkenyl group, -O-Z₂, a C6-C30 aryl group, or a C3-C30 heteroaryl group;
Z₁ and Z₂ are each independently selected from any one of a linear or branched, C1-C10 alkyl group.

2. The electrolyte according to claim 1, wherein the low-polar solvent comprises any one or a combination of at least two of cyclopropyl methyl ether, cyclobutyl ethyl ether, cyclopentyl methyl ether, cyclopentyl ethyl ether, cyclopentyl propyl ether, cyclohexyl methyl ether, cyclohexyl ethyl ether, cyclopentyl trifluoromethyl ether, cyclohexyl trifluoromethyl ether, cycloheptyl ethyl ether, cyclooctyl propyl ether, or cyclooctyl butyl ether.

3. The electrolyte according to claim 1 or 2, wherein the low-polar solvent in the solvent has a mass percentage of 10-85%, and further optionally 20-60%.

4. The electrolyte according to any one of claims 1-3, wherein the alkali metal salt comprises any one or a combination of at least two of a lithium salt, a sodium salt, or a potassium salt.

5. The electrolyte according to claim 4, wherein the lithium salt comprises any one or a combination of at least two of lithium bis(fluorosulfonyl)imide, lithium bis(trifluoromethanesulfonyl)imide, lithium hexafluorophosphate, lithium perchlorate, lithium tetrafluoroborate, lithium bis(oxalate)borate, lithium hexafluoroarsenate, lithium difluoro (oxalate)borate, lithium difluorophosphate, or lithium 4,5-dicyano-2-trifluoromethylimidazole;
optionally, the sodium salt comprises any one or a combination of at least two of sodium bis(fluorosulfonyl)imide, sodium bis(trifluoromethanesulfonyl)imide, sodium hexafluorophosphate, sodium perchlorate, sodium tetrafluoroborate, sodium bis(oxalate)borate, sodium hexafluoroarsenate, sodium difluoro(oxalate)borate, sodium difluorophosphate, or sodium 4,5-dicyano-2-trifluoromethylimidazole;
optionally, the potassium salt comprises any one or a combination of at least two of potassium bis(fluorosulfonyl)imide, potassium bis(trifluoromethanesulfonyl)imide, potassium hexafluorophosphate, potassium perchlorate, potassium tetrafluoroborate, potassium bis(oxalate) borate, potassium hexafluoroarsenate, potassium difluoro(oxalate)borate, potassium difluorophosphate, or potassium 4,5-dicyano-2-trifluoromethylimidazole;
optionally, the alkali metal salt in the electrolyte has a concentration of 0.1-6 mol/L, and further optionally 0.5-2 mol/L.

6. The electrolyte according to any one of claims 1-5, wherein the ionic liquid has a structure of A⁺[B]⁻;
A⁺ is selected from any one or a combination of at least two of the following structures: 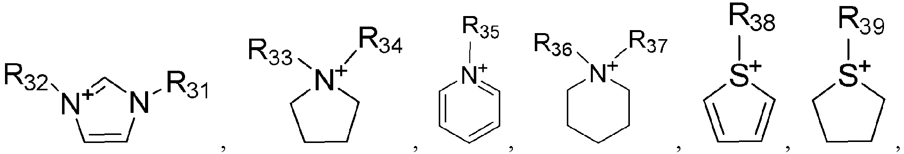 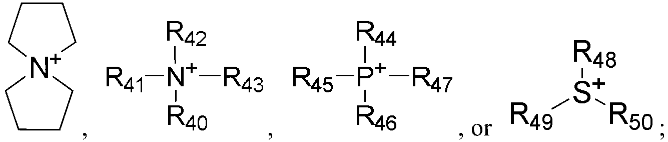
in the structures, R₃₁, R₃₂, R₃₃, R₃₄, R₃₅, R₃₆, R₃₇, R₃₈, R₃₉, R₄₀, R₄₁, R₄₂, R₄₃, R₄₄, R₄₅, R₄₆, R₄₇, R₄₈, R₄₉, and R₅₀ are each independently selected from any one of a substituted or unsubstituted, linear or branched, C1-C20 alkyl group, -R'-O-Z₃, -O-Ar₁, an amino group, a substituted or unsubstituted, C6-C12 aryl group, a substituted or unsubstituted, C3-C12 heteroaryl group, a cyano group, a nitro group, or a halogen;
Z₃ is selected from any one of a substituted or unsubstituted, linear or branched, C1-C10 alkyl group;
R' is selected from any one of a single bond, or a substituted or unsubstituted, linear or branched, C1-C10 alkylidene group;
Ar₁ is selected from any one of a substituted or unsubstituted, C6-C12 aryl group, or a substituted or unsubstituted, C3-C12 heteroaryl group;
substituents for the substitution in R₃₁, R₃₂, R₃₃, R₃₄, R₃₅, R₃₆, R₃₇, R₃₈, R₃₉, R₄₀, R₄₁, R₄₂, R₄₃, R₄₄, R₄₅, R₄₆, R₄₇, R₄₈, R₄₉, R₅₀, Z₃, Ar₁, and R' are each independently selected from at least one of halogens;
[B]⁻ is selected from any one or a combination of at least two of FSI⁻, TFSI⁻, BF₄⁻, PF₆⁻, PF₂O₂⁻, NO₃⁻, CF₃SO₃⁻, BOB⁻, or DFOB⁻.

7. The electrolyte according to claim 6, wherein the A⁺ comprises any one or a combination of at least two of the following cations: 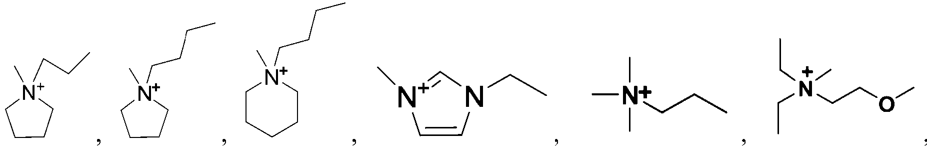 or 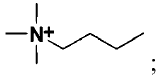 optionally, the ionic liquid in the solvent has a mass percentage of 10-85%, and further optionally 30-70%.

8. The electrolyte according to any one of claims 1-7, wherein the inert diluent comprises any one or a combination of at least two of a halogenated ether, a halogenated benzene, or an alkyl halide.

9. The electrolyte according to claim 8, wherein the halogenated ether comprises any one or a combination of at least two of 1,1,1,3,3,3-hexafluoroisopropyl methyl ether, 2,2,2-trifluoroethyl ether, 1,1,2,2-tetrafluoroethyl-2,2,3,3-tetrafluoropropyl ether, 2,2,2-trifluoroethyl methyl ether, 1,1,2,2-tetrafluoroethyl ethyl ether, 1,1,2,2-tetrafluoroethyl-2,2,2-trifluoroethyl ether, methyl nonafluorobutyl ether, or ethyl nonafluorobutyl ether;
optionally, the halogenated benzene comprises fluorobenzene and/or 1,2-difluorobenzene;
optionally, the alkyl halide comprises any one or a combination of at least two of dichloromethane, dichloroethane, dichloropropane, dichlorobutane, chloroform, trichloropropane, monochlorodifluoromethane, dichloromonofluoromethane, or difluoromethane;
optionally, the inert diluent in the solvent has a mass percentage of 5-60%, and further optionally 10-50%.

10. An alkali metal secondary battery, which comprises a negative electrode, a positive electrode, the electrolyte according to any one of claims 1-9, and a separator.

11. The alkali metal secondary battery according to claim 10, wherein the negative electrode comprises an alkali metal negative electrode and a negative current collector;
optionally, the alkali metal negative electrode comprises any one of lithium, sodium, or potassium;
optionally, the negative current collector comprises any one of a copper foil, a nickel foil, or a nickel-plated steel strip.

12. The alkali metal secondary battery according to claim 11, wherein the outer surface of the alkali metal negative electrode is coated with a poly(ionic liquid) artificial SEI film;
optionally, the poly(ionic liquid) artificial SEI film has a thickness of 2-2000 nm.

13. The alkali metal secondary battery according to claim 12, wherein a material of the poly(ionic liquid) artificial SEI film has a structure as shown in Formula I, Formula II, or Formula III: 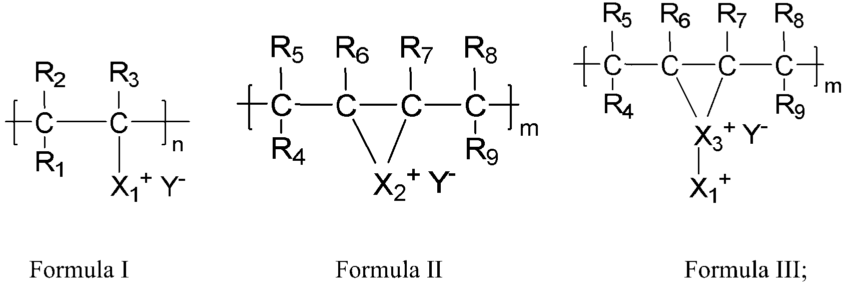
in the Formula **I,** Formula **II,** and Formula **III,** R₁, R₂, R₃, R₄, R₅, R₆, R₇, R₈, and R₉ are each independently selected from any one of a hydrogen atom, a substituted or unsubstituted, linear or branched, C1-C10 alkyl group, -O-Z₄, -O-Ar₂, an amino group, a substituted or unsubstituted, C3-C12 heteraryl group, a substituted or unsubstituted, C6-C12 aryl group, a cyano group, a nitro group, or a halogen;
Z₄ is selected from any one of a substituted or unsubstituted, linear or branched, C1-C10 alkyl group;
Ar₂ is selected from any one of a substituted or unsubstituted, C6-C12 aryl group, or a substituted or unsubstituted, C3-C12 heteroaryl group;
substituents for the substitution in R₁, R₂, R₃, R₄, R₅, R₆, R₇, R₈, R₉, Z₄, and Ar₂ are each independently selected from at least one of halogens;
X₁⁺ is selected from any one or a combination of at least two of the following structures: 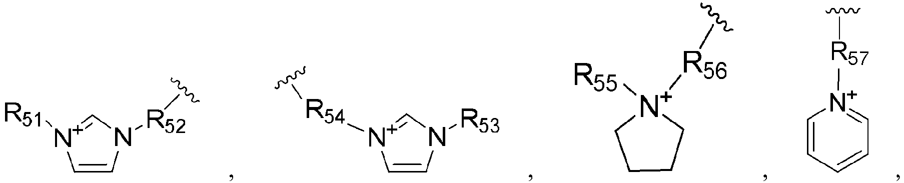 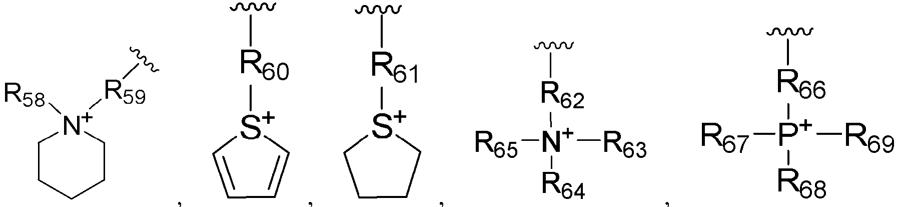 or 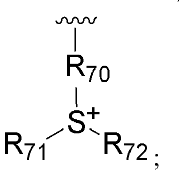
X₂⁺ is selected from any one of the following structures: 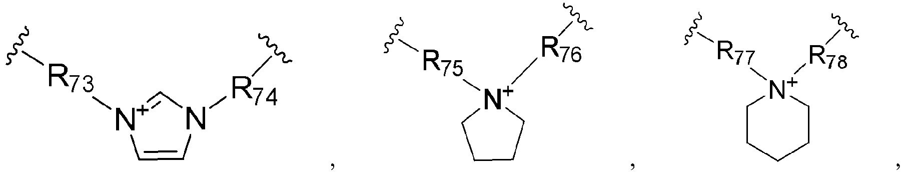 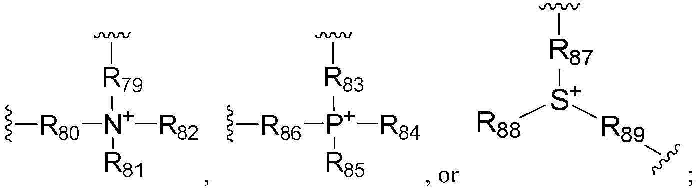
X₃⁺ is selected from any one of the following structures: 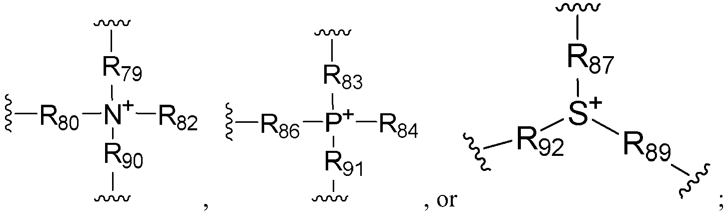
in the structure, 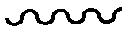 represents a linkage site of the group;
R₅₁, R₅₃, R₅₅, R₅₈, R₆₃, R₆₄, R₆₅, R₆₇, R₆₈, R₆₉, R₇₁, R₇₂, R₈₁, R₈₂, R₈₄, R₈₅, or R₈₈ are each independently selected from any one of a substituted or unsubstituted, linear or branched, C1-C20 alkyl group, -O-Z₅, -O-Ar₃, an amino group, a substituted or unsubstituted, C3-C12 heteroaryl group, a substituted or unsubstituted, C6-C12 aryl group, a cyano group, a nitro group, or a halogen;
Z₅ is selected from any one of a substituted or unsubstituted, linear or branched, C1-C10 alkyl group;
Ar₃ is selected from any one of a substituted or unsubstituted, C6-C12 aryl group, or a substituted or unsubstituted, C3-C12 heteroaryl group;
R₅₂, R₅₄, R₅₆, R₅₇, R₅₉, R₆₀, R₆₁, R₆₂, R₆₆, R₇₀, R₇₃, R₇₄, R₇₅, R₇₆, R₇₇, R₇₈, R₇₉, R₈₀, R₈₃, R₈₆, R₈₇, R₈₉, R₉₀, R₉₁, and R₉₂ are each independently selected from any one of a single bond, a substituted or unsubstituted, linear or branched, C1-C20 alkylidene group, -O-Z₆-, -O-Ar₄-, -Z₇-Ar₅-, an imino group, a substituted or unsubstituted, C3-C12 heteroarylidene group, or a substituted or unsubstituted, C6-C12 arylidene group;
Z₆ and Z₇ are each independently selected from any one of a substituted or unsubstituted, linear or branched, C1-C10 alkylidene group;
Ar₄ and Ar₅ are each independently selected from any one of a substituted or unsubstituted, C6-C12 arylidene group, or a substituted or unsubstituted, C3-C12 heteroarylidene group;
substituents for the substitution in R₅₁, R₅₂, R₅₃, R₅₄, R₅₅, R₅₆, R₅₇, R₅₈, R₅₉, R₆₀, R₆₁, R₆₂, R₆₃, R₆₄, R₆₅, R₆₆, R₆₇, R₆₈, R₆₉, R₇₀, R₇₁, R₇₂, R₇₃, R₇₄, R₇₅, R₇₆, R₇₇, R₇₈, R₇₉, R₈₀, R₈₁, R₈₂, R₈₃, R₈₄, R₈₅, R₈₆, R₈₇, R₈₈, R₈₉, R₉₀, R₉₁, R₉₂, Z₅, Z₆, Z₇, Ar₃, Ar₄, or Ar₅ are each independently selected from at least one of halogens;
Y⁻ is selected from any one or a combination of at least two of FSI⁻, TFSI⁻, BF₄⁻, PF₆⁻, PF₂O₂⁻, NO₃⁻, CF₃SO₃⁻, BOB⁻, or DFOB⁻;
n and m are each independently selected from integers from 1 to 100000.

14. The alkali metal secondary battery according to claim 12 or 13, wherein a material of the poly(ionic liquid) artificial SEI film comprises any one or a combination of at least two of the following compounds: 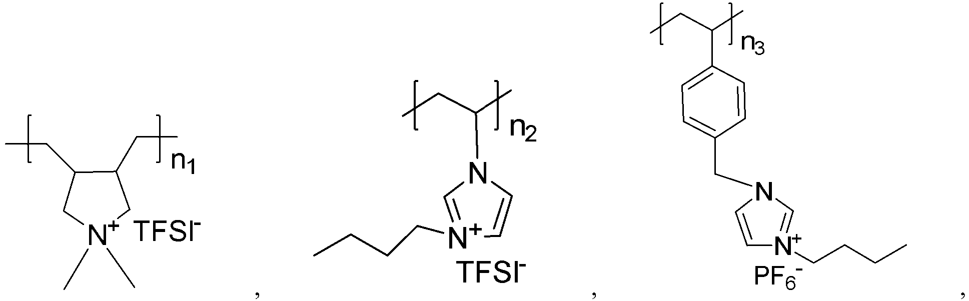 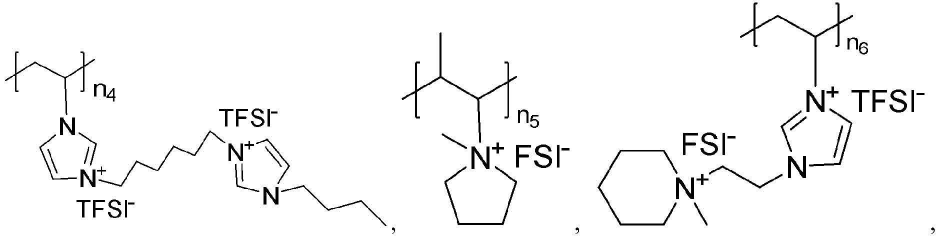 or 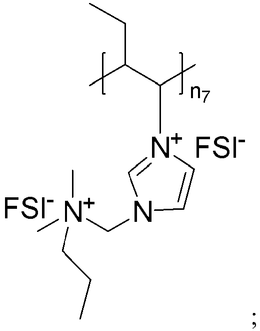 in the compounds, n₁, n₂, n₃, n₄, n₅, n₆, and n₇ are each independently selected from integers from 1 to 100000.

15. The alkali metal secondary battery according to any one of claims 10-14, wherein a positive electrode active material of the positive electrode comprises any one of lithium cobalt oxide, lithium manganese oxide, a ternary positive electrode material, a lithium-rich manganese-based positive electrode material, a nickel-manganese positive electrode material, lithium iron phosphate, lithium manganese phosphate, or a sulfur-based positive electrode material;
optionally, the sulfur-based positive electrode material comprises any one of elemental sulfur, lithium sulfide, lithium polysulfide, a sulfur/carbon composite material, a lithium sulfide/carbon composite material, a sulfur/polymer composite material, or a lithium polysulfide/carbon composite material;
optionally, the separator comprises a glass fiber membrane, a cellulose membrane, and a porous polyolefin membrane;
optionally, the alkali metal secondary battery further comprises a tab.
